(19) Europäisches Patentamt
European Patent Office
Office européen des brevets

(11) EP 2 615 138 A1

(12) EUROPEAN PATENT APPLICATION
published in accordance with Art. 153(4) EPC

(43) Date of publication:
**17.07.2013 Bulletin 2013/29**

(21) Application number: **11823391.5**

(22) Date of filing: **12.08.2011**

(51) Int Cl.:
***C08L 67/04*** (2006.01) ***C08J 5/18*** (2006.01)
***C08K 5/20*** (2006.01) ***C08L 101/16*** (2006.01)

(86) International application number:
**PCT/JP2011/068729**

(87) International publication number:
**WO 2012/032912 (15.03.2012 Gazette 2012/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.09.2010 JP 2010203055**

(71) Applicant: **Teijin Limited**
**Osaka-shi, Osaka 541-0054 (JP)**

(72) Inventors:
- **ONO, Yuhei**
  **Hino-shi**
  **Tokyo 191-0065 (JP)**
- **UCHIYAMA, Akihiko**
  **Tokyo 100-0013 (JP)**
- **OYA, Taro**
  **Anpachi-gun**
  **Gifu 503-0123 (JP)**

(74) Representative: **Hallybone, Huw George et al**
**Carpmaels & Ransford**
**One Southampton Row**
**London WC1B 5HA (GB)**

# (54) STEREOCOMPLEX POLYLACTIC ACID FILM AND RESIN COMPOSITION

(57) A stereocomplex polylactic acid resin composition containing an amide compound represented by the following general formula (1) and a film composed thereof. A stereocomplex polylactic acid excellent in transparency and a resin composition can be provided.

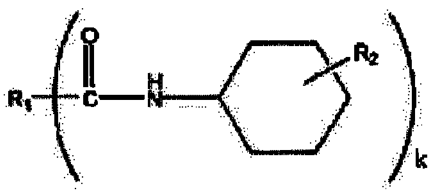

(1)

(In the formula, $R_1$ represents a residue obtainable by removing all carboxyl groups from 1,2,3-propane tricarboxylic acid or 1,2,3,4-butane tetracarboxylic acid; three or four $R_2$ may be the same as or different from each other and each represents a hydrogen atom or a linear or branched chain alkyl group having 1 to 10 carbon atoms; and k represents an integer of 3 or 4.)

EP 2 615 138 A1

## Description

[Field of the Invention]

The present invention relates to a stereocomplex polylactic acid film especially excellent in transparency and a resin composition, more particularly to a stereocomplex polylactic acid film for which low retardation is required.

[Background Art]

As a transparent polymeric substrate for optical use, for example, for liquid display, touch panel, etc., a cellulosic film such as triacetyl cellulose, a polyester film such as polyethyleneterephthalate film, a polycarbonate film, etc. are known.
However, since these resins originate from petroleum which is a finite resource as the starting material, a problem of depletion of the petroleum resource is concerned.
In recent years, a polylactic acid polymer is drawing attention as a material with which the above-mentioned problem may be solved. As a fact, there have been a lot of studies and developments on this material. The problem of depletion of resource may be solved by using a polylactic acid polymer, since its starting material is a plant material, such as corn. However, since polylactic acid has a lower glass transition temperature compared to the conventional petroleum-derived material, such as polycarbonate, crystallization is needed to provide heat resistance for practical use of polylactic acid polymer. Crystallization lowers the transparency and causes a problem that polylactic acid polymer cannot be used for optical use.
On the other hand, it is known that stereocomplex polylactic acid is formed by mixing poly-L-lactic acid which consists of L-lactic acid unit and poly-D-lactic acid which consists of D-lactic acid unit in a solution or molten state (for example, Patent Document 1 and Non-patent Document 1) and that this stereocomplex polylactic acid exhibits higher transparency and heat resistance compared to poly-L-lactic acid and poly-D-lactic acid.
Furthermore, although there is a method to further improve the transparency by controlling fluidity at extrusion process or using a nucleating agent for the stereocomplex polylactic acid (for example, Patent Document 2, 3 and 4), a film stretching operation and the like are required to obtain the transparency sufficient for optical use even using these techniques. Such operation is not applicable to a polarizer protection film for polarizing plate, a substrate for a transparent conductive laminate, etc. for which low retardation is required. In addition, there has been a problem that the crystalline structure such as spherocrystal causes depolarization, even if the haze is low. The depolarization is evaluated by an increase of brightness when a film is inserted between a pair of polarizing plates in a crossed Nicol arrangement.

[Citation List]

[Patent Document 1] Japanese Patent Laid-Open Publication No.S63-241024
Patent Document 2] Japanese Patent Laid-Open Publication No.2008-248162
[Patent Document 3] Japanese Patent Laid-Open Publication No.2004-359828
[Patent Document 4] Japanese Patent Laid-Open Publication No.2009-263561
[Non-patent Document 1] Macromolecules, 24, 5651 (1991)

[Disclosure of the Invention]

The present invention aims at solving the problems of the conventional art mentioned above to provide a stereocomplex polylactic acid film excellent in transparency and a resin composition.

[Means for Solving the Problem]

The present inventors studied the technique to modify the stereocomplex polylactic acid by adding various additives in view of the above-mentioned conventional techniques and found that, surprisingly, the stereocomplex polylactic acid exhibits a different behavior when a specific amide compound which has been known as a nucleating agent for polyolefin resin is added, compared to other compounds known as the nucleating agent for polyolefin resin.
The present inventors have completed the present invention by an extensive investigation based on this finding.
Thus, the present invention includes the following items.

1. A stereocomplex polylactic acid film containing an amide compound represented by the following general formula

(1):

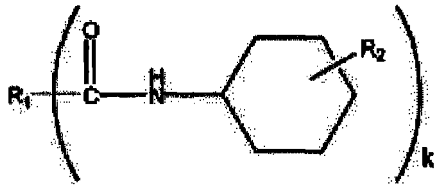

(1)

(wherein $R_1$ represents a residue obtainable by removing all carboxyl groups from 1,2,3-propane tricarboxylic acid or 1,2,3,4-butane tetracarboxylic acid; three or four $R_2$ may be the same as or different from each other and each represents a hydrogen atom or a linear or branched chain alkyl group having 1-10 carbon atoms; and k represents an integer of 3 or 4).

2. The stereocomplex polylactic acid film according to the above-mentioned item 1, wherein the amide compound is a compound represented by the following formula (2):

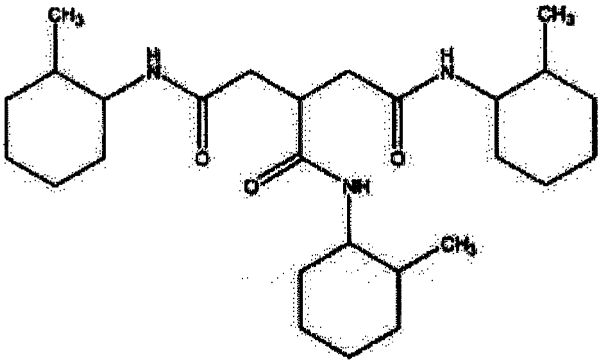

(2)

3. The stereocomplex polylactic acid film according to the above-mentioned item 1, wherein its crystallinity (C) is 90% or more.

4. The stereocomplex polylactic acid film according to the above-mentioned item 1, wherein its crystallinity (C) is 70% or less.

5. The stereocomplex polylactic acid film according to the above-mentioned item 1, wherein its stereocomplex crystallinity (S) is 90% or more.

6. The stereocomplex polylactic acid film according to the above-mentioned item 1, wherein its haze is 1% or less.

7. The stereocomplex polylactic acid film according to the above-mentioned item 1, wherein the absolute value of its out-of-plane retardation (Rth) is 20 nm or less.

8. The stereocomplex polylactic acid film according to the above-mentioned item 1, wherein its out-of-plane retardation (Rth) is -20 nm or less.

9. A stereocomplex polylactic acid resin composition containing an amide compound represented by the following general formula (1):

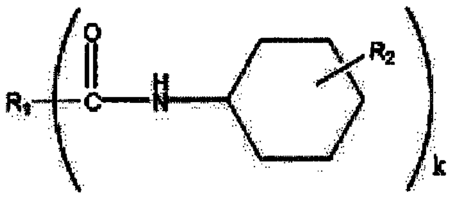

(1)

(wherein $R_1$ represents a residue obtainable by removing all carboxyl groups from 1,2,3-propane tricarboxylic acid or 1,2,3,4-butane tetracarboxylic acid; three or four $R_2$ may be the same as or different from each other and each represents a hydrogen atom or a linear or branched chain alkyl group having 1 to 10 carbon atoms; and k represents an integer of 3 or 4).

10. The stereocomplex polylactic acid resin composition according to the above-mentioned item 9, wherein the amide compound is a compound represented by the following formula (2):

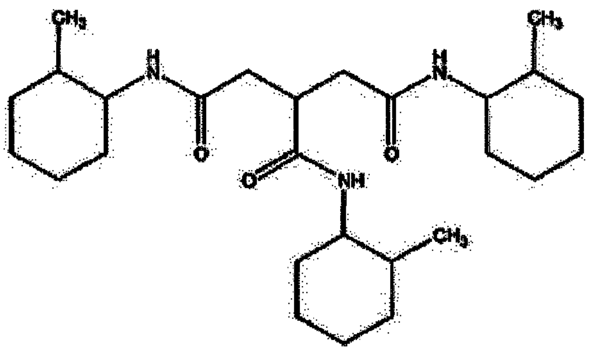

(2)

[Advantage of the Invention]

According to the present invention, a stereocomplex polylactic acid film especially excellent in transparency and a resin composition are provided by using plant-derived materials, considering for the environment.

[Best Mode for Carrying Out the Invention]

Hereinafter, the present invention will be illustrated in detail.

<Stereocomplex polylactic acid film>

The stereocomplex polylactic acid film of the present invention contains an amide compound represented by the following general formula (1):

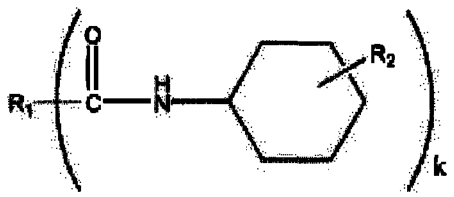

(1)

(wherein $R_1$ represents a residue obtainable by removing all carboxyl groups from 1,2,3-propane tricarboxylic acid or 1,2,3,4-butane tetracarboxylic acid; three or four $R_2$ may be the same as or different from each other and each represents a hydrogen atom or a linear or branched chain alkyl group having 1 to 10 carbon atoms; and k represents an integer of 3 or 4).

Content of the amide compound is preferably 0.05 to 2.0 parts in weight, more preferably 0.1 to 1.5 parts in weight, even more preferably 0.12 to 1.0 parts in weight, especially preferably 0.15 to 0.8 parts in weight relative to 100 parts in weight of the stereocomplex polylactic acid resin.

If the content is less than 0.05 parts in weight, the effect of addition of the amide compound cannot be obtained. If the content is more than 2.0 parts in weight, the amide compound cannot be dispersed well and the haze increases.

In addition, known organic or inorganic materials may be added to the stereocomplex polylactic acid film in the range where the heat resistance, optical properties and mechanical properties needed are not affected. For example, calcium silicate, talc, kaolinite, montmorillonite and other organic compounds may be used in combination with the amide compound.

In the present invention, the mechanism of development of transparency by the addition of the above-mentioned amide compound is not necessarily clear. In addition, the present invention is not bound to any specific mechanism or theory.

The crystallinity (C) of the stereocomplex polylactic acid used in the present invention is the value obtained by the following equation from the heat of crystal fusion ($\Delta H_m$) of polylactic acid moiety at the first temperature rising and the heat of crystallization ($\Delta H_c$) of polylactic acid moiety generated by crystallization during temperature rising in the differential scanning colorimetry (DSC).

$$(C)=\{(\Delta H_m-\Delta H_c)/\Delta H_m\}\times 100(\%)$$

The crystallinity (C) represents the crystalline state of the stereocomplex polylactic acid film and is preferably in the range of 90% or more, more preferably in the range of 95% to 100%, especially preferably in the range of 98% to 100%, most preferably 100%, depending on its application. When the crystallinity is in this range, the heat resistance (shape stability) of the stereocomplex polylactic acid film is good even if it is used alone.

On the other hand, the stereocomplex polylactic acid film of the present invention may be used as a non-crystalline state without crystallization treatment, because the stereocomplex polylactic acid film of the present invention without crystallization treatment is excellent in transparency even if the crystallization proceeds spontaneously under the using environment, storage environment, or the like. It is noted that the non-crystalline state means that the crystallinity (C) is 70% or less, preferably 60% or less, more preferably 50% or less, especially preferably 40% or less, most preferably 30% or less.

However, the stereocomplex polylactic acid film in the non-crystalline state with the crystallinity (C) of 70% or less significantly softens above the glass transition temperature of polylactic acid, so that it is preferable that the film be used in a laminated state with other substrate such as film or glass. Its suitable application includes, for example, protection of polarizer in a polarizing plate.

The polarizing plate is generally used in a laminated state composed of a PVA (polyvinyl alcohol) polarizer film interleaved between two polarizer protection films and adhered to a glass substrate. Therefore, the heat resistance (shape stability) is not required for the stereocomplex polylactic acid film used alone as the polarizer protection film.

In addition, even in a state that the stereocomplex polylactic acid film of the present invention is not adhered to a glass substrate, it crystallizes at lower temperature than the temperature at which PVA starts heat shrinkage. Therefore, it is possible to prevent the decrease of the polarization degree, because the stereocomplex polylactic acid film prevents the heat shrinkage of PVA before PVA starts shrinking by heat.

By using the stereocomplex polylactic acid film in such non-crystalline state, for example, reduction of production cost by eliminating the heat treatment process of the film and improvement of adhesiveness with an epoxy adhesive used for adhesion with the PVA polarizer may be expected.

In regard to the transparency of the stereocomplex polylactic acid film, for example, the total light transmittance is 80% or more, preferably 85% or more, more preferably 90% or more, especially preferably 91% or more, most preferably 92% or more. The haze is 1% or less, preferably 0.8% or less, more preferably 0.5% or less, especially preferably 0.4% or less, most preferably 0.3% or less.

Although the thickness of the stereocomplex polylactic acid film may be determined as needed, it is about 10 to 500 μm from a viewpoint of strength and workability such as handling properties, more preferably 15 to 300 μm, especially preferably 20 to 200 μm.

Although the stereocomplex polylactic acid film must contain the stereocomplex polylactic acid resin described later, other resins may be blended with the stereocomplex polylactic acid resin from a viewpoint of the heat resistance, optical properties and mechanical properties required.

Resins which may be blended include, for example, polyamide resin, polyacetal resin, polyolefin resin such as polyethylene resin and polypropylene resin, polystyrene resin, acrylic resin, polyurethane resin, chlorinated polyethylene resin, chlorinated polypropylene resin, aromatic polyketone resin, aliphatic polyketone resin, fluorine resin, polyphenylene sulfide resin, polyether ketone resin, polyimide resin, thermoplastic starch resin, AS resin, ABS resin, AES resin, ACS resin, polyvinyl chloride resin, polyvinylidene chloride resin, vinylester resin, MS resin, polycarbonate resin, polyarylate resin, polysulfone resin, polyethersulfone resin, phenoxy resin, polyphenylene oxide resin, poly-4-methyl-pentene-1, polyetherimide resin, polyvinyl alcohol resin, etc. Among them, acrylic resin, especially polymethyl methacrylate, is preferred from a viewpoint of good compatibility and close refractive index.

Content of the stereocomplex polylactic acid resin in the stereocomplex polylactic acid film is preferably 80 wt% or more, more preferably 85 wt% or more, even more preferably 90 wt% or more, particularly preferably 95 wt% or more, most preferably 98 wt% or more. If the content of the stereocomplex polylactic acid resin is less than 80 wt%, the stereocomplex polylactic acid resin hardly crystallizes, sometimes causing a problem with the heat resistance and transparency.

In regard to the heat resistance of the stereocomplex polylactic acid film, the absolute value of the dimension change rate when heat-treated, for example, at 120°C for 60 minutes is 3% or less, preferably 2% or less, more preferably 1.5% or less, especially preferably 1% or less, most preferably 0.5% or less.

In addition, since the stereocomplex polylactic acid film of the present invention is excellent in transparency after crystallization even without stretching treatment, it is possible to realize the low retardation property. For example, the in-plane retardation (R) defined by the following equation is 10 nm or less, preferably 5 nm or less, more preferably 3 nm or less, especially preferably 2 nm or less, most preferably 1 nm or less. The absolute value of the out-of-plane

retardation (Rth) is 20 nm or less, preferably 15 nm or less, more preferably 10 nm or less, especially preferably 5 nm or less, most preferably 3 nm or less.

The retardation in the present invention is herein defined as follows:

$$\text{In-plane retardation (R)}=|n_x-n_y|\times d$$

$$\text{Out-of-plane retardation (Rth)}=\{(n_x+n_y)/2-n_z\}\times d$$

wherein $n_x$, ny and $n_z$ are each three dimensional refractive index of the film, corresponding to the refractive index in the x-axis direction which is the maximum refractive index in the film plane ($n_x$), the refractive index in the y-axis direction which is perpendicular to the x-axis in the film plane (ny), and the refractive index in the normal direction of the film ($n_z$), respectively. d is the thickness (nm) of the retardation film.

Furthermore, the stereocomplex polylactic acid film containing the amide compound of the present invention surprisingly provides the out-of-plane retardation (Rth) of-20nm or less easily depending on the heat treatment conditions.

In addition, when the retardation property is needed depending on the application, the required retardation property may be developed by stretching treatment.

<Stereocomplex polylactic acid resin>

The stereocomplex crystallinity (S) of the stereocomplex polylactic acid used in the present invention is a value obtainable by the following equation from the heat of fusion of polylactic acid homocrystal observed below 190°C ($\Delta Hm_h$) and the heat of fusion of polylactic acid stereocomplex crystal observed at 190°C or higher ($\Delta Hm_{sc}$) by differential scanning calorimetry (DSC).

$$(S)=[\Delta Hm_{sc}/(\Delta Hm_h+\Delta Hm_{sc})]\times 100$$

The stereocomplex crystallinity (S) is preferably 90% to 100%, more preferably 95% to 100%, especially preferably 98% to 100%, especially preferably 100%.

The stereocomplex crystallinity (S) of 90% or more makes it possible to keep high transparency and high heat resistance.

In order to suitably satisfy the above-mentioned stereocomplex crystallinity (S), it is preferable that the weight ratio of poly-D-lactic acid component and poly-L-lactic acid component in polylactic acid be 90/10 to 10/90.

More preferably the ratio is 80/20 to 20/80, more preferably 30/70 to 70/30, especially preferably 40/60 to 60/40, the ratio being selected theoretically as close as possible to 1/1.

Poly-L-lactic acid component and poly-D-lactic acid component may be produced by conventionally known method.

For example, those components may be produced by ring opening polymerization of L-lactide or D-lactide in the presence of a metal-containing catalyst. Those components may also be produced by solid-phase polymerization of low molecular weight polylactic acid containing a metal-containing catalyst under reduced pressure or normal to increased pressure and in the presence or absence of inert gas flow after crystallization or without crystallization as needed. Those components may also be produced by direct polymerization of lactic acid through dehydration condensation in the presence or absence of organic solvent.

The polymerization reaction may be carried out using a conventionally known reaction vessel. For example, a vertical or horizontal reactor equipped with a stirring blade for high viscosity, such as a helical ribbon blade, may be used alone or in parallel for ring opening polymerization or direct polymerization. Any of batch type, continuous type or semi-batch type reactors or a combination thereof may be used.

Alcohol may be used as a polymerization initiator. Alcohol which does not inhibit polymerization of polylactic acid and is not volatile is preferred. For example, decanol, dodecanol, tetradecanol, hexadecanol, octadecanol, ethylene glycol, trimethylol propane, pentaerythritol, etc. may be suitably used.

Polylactic acid prepolymer to be used for the solid-phase polymerization is crystallized in advance as a preferred embodiment from a viewpoint of prevention of fusion of the resin pellet. The prepolymer is polymerized in a solid state in a fixed vertical or horizontal reaction vessel or in a reaction vessel which rotates by itself (a tumbler or kiln such as a rotary kiln) in a temperature range from the glass transition temperature to below the melting temperature of the prepolymer.

As a metal-containing catalyst, alkaline metal, alkaline earth metal, rare earthes, transition metals, aliphatic acid salt, carbonate, sulfate, phosphate, oxide, hydroxide, halide, alcoholate of aluminum, germanium, tin, antimony, titanium, etc. are exemplified.

Among them, aliphatic acid salt, carbonate, sulfate, phosphate, oxide, hydroxide, halide, and alcoholate containing at least one metal selected from tin, aluminum, zinc, calcium, titanium, germanium, manganese, magnesium and rare earth elements are preferred.

As a preferred catalyst, a tin compound, specifically a tin-containing compound such as stannous chloride, stannous bromide, stannous iodide, stannous sulfate, stannic oxide, tin myristate, tin octylate, tin stearate, or tetraphenyl tin is exemplified due to their high catalyst activity and low degree of side reaction.

Among them, tin (II) compounds, specifically diethoxytin, dinonyloxytin, tin (II) myristate, tin (II) octylate, tin (II) stearate, tin (II) chloride, etc. are suitably exemplified.

Amount of the catalyst to be used is $0.42\times10^{-4}$ to $100\times10^{-4}$ mol, especially $1.68\times10^{-4}$ to $42.1\times10^{-4}$ mol, considering the reactivity as well as the color hue and stability of polylactides to be obtained, especially preferably $2.53\times10^{-4}$ to $16.8\times10^{-4}$ mol, relative to 1kg of lactide.

It is preferable that the metal-containing catalyst which was used for polylactic acid polymerization be inactivated by a conventionally known inactivator prior to use of polylactic acid.

As such inactivator, for example, an organic ligand composed of a group of chelate ligand which has an imino group and is capable of coordinating with a polymerization metal catalyst, phosphoric acid having a low oxidation number of 5 or less, such as dihydride oxophosphoric (I) acid, dihydride tetraoxodiphosphoric (II, II) acid, hydride trioxophosphoric (III) acid, dihydride pentaoxodiphophoric (III, III) acid, hydride pentaoxodiphosphoric (II, IV) acid, dodecaoxohexaphosphoric (III) acid, hydride octaoxotriphosphoric (III, IV, IV) acid, octaoxotriphosphoric (IV, III, IV) acid, hydride hexaoxodiphosphoric (III, V) acid, hexaoxodiphosphoric (IV) acid, decaoxotetraphosphoric (IV) acid, hendecaoxotetraphosphoric (IV) acid, eneaoxotriphosphoric (V, IV, IV) acid, and the like, phosphoric acids represented by the formula $xH_2O{\cdot}yP_2O_5$, including orthophosphoric acid wherein x/y=3, polyphosphoric acid wherein 2>x/y>1 and referred to as diphosphoric acid, triphosphoric acid, tetraphosphoric acid, pentaphosphoric acid, and the like, depending on the degree of condensation and a mixture thereof, metaphosphoric acid wherein x/y=1, *inter alia* trimetaphosphoric acid and tetrametaphosphoric acid, ultraphosphoric acid wherein 1>x/y>0 and having a network structure with a residual part of phosphorus pentaoxide structure (They are sometimes collectively denoted by metaphosphoric acid compounds.) and acidic salt of these acids, partial or whole ester of monovalent or multivalent alcohols or polyalkyleneglycols, phosphono-substituted lower aliphatic carboxylic acid derivatives, and the like are exemplified.

From a viewpoint of catalyst deactivation potential, phosphoric acids represented by the formula $xH_2O{\cdot}yP_2O_5$, including orthophosphoric acid wherein x/y=3, polyphosphoric acid wherein 2>x/y>1 and referred to as diphosphoric acid, triphosphoric acid, tetraphosphoric acid, pentaphosphoric acid, and the like, depending on the degree of condensation and a mixture thereof, metaphosphoric acid wherein x/y=1, *inter alia* trimetaphosphoric acid and tetrametaphosphoric acid, ultraphosphoric acid wherein 1>x/y>0 and having a network structure with a residual part of phosphorus pentaoxide structure (They are sometimes collectively denoted by metaphosphoric acid compounds.) and acidic salt of these acids, oxophosphoric acid partial ester of monovalent or polyvalent alcohols or polyalkyleneglycols or acidic esters of thereof, phosphono-substituted lower aliphatic carboxylic acid derivatives, and the above-mentioned metaphosphoric acid compounds are preferably used.

The above-mentioned metaphosphoric acid compounds include a cyclic metaphosphoric acid composed of about 3 to 200 phosphoric acid units condensed, ultra region metaphosphoric acid having a three-dimensional network structure and alkaline metal salts, alkaline earth metal salts, and onium salts thereof. Among these, a sodium salt of cyclic metaphosphoric acid, a sodium salt of ultra region metaphosphoric acid, dihexylphosphonoethyl acetate (hereinafter sometimes abbreviated as DHPA), which is a phosphono-substituted lower aliphatic carboxylic acid derivative, and the like are preferably used.

Lactide content of polylactic acid used in the present invention is preferably 1 to 5000 ppm. Lactide contained in polylactic acid may degrade the resin during the melting process, worsen the color hue, sometimes causing the product unusable.

Although poly-L-lactic acid and or poly-D-lactic acid usually contains 1 to 5 wt% of lactide immediately after melting ring opening polymerization, the content of lactide may be reduced to suitable range by performing a conventionally known lactide reducing technique, such as vacuum evaporation in a single- or multi-screw extruder or a high vacuum treatment in the polymerization apparatus alone or in combination at any stage from the time point of termination of polymerization of poly-L-lactic acid and/or poly-D-lactic acid to molding of polylactic acid.

Although lower lactide content improves the melt stability and hygrothermal stability of the resin, it is rational and economical to make the content suitable to the desired purpose, considering the advantage of lowering the melt viscosity of the resin. Thus, it is rational to set the lactide content to 1 to 1000 ppm where the practical melt stability is achieved. More preferably the range of 1 to 700 ppm, more preferably 2 to 500 ppm, especially preferably 5 to 100 ppm is selected.

Since the polylactic acid component contains lactide in such range, the stability of polylactic acid at melt-film forming of stereocomplex polylactic acid to be used in the present invention is improved, leading to the advantage of efficient production, and hygrothermal stability and low gas generation may be enhanced.

The weight average molecular weight of polylactic acid to be used in the present invention is selected considering the relationship between the moldability and the mechanical and thermal properties of the molded articles obtained. Thus, the weight average molecular weight is preferably 80,000 or more, more preferably 100,000 or more, more preferably 130,000 or more, in order to exert the mechanical and thermal properties such as the strength, elongation, heat resistance, etc. of the molded articles.

However, since the melt viscosity of polylactic acid increases in an exponential manner as the weight average molecular weight increases, molding temperature should be set higher than the heat resistance temperature of polylactic acid in some cases in order to have the viscosity of polylactic acid within the moldable range when melt molding such as injection molding is carried out.

Specifically, polylactic acid film discolors due to the thermal degradation of polylactic acid when molded above 300°C and possibly looses a commercial value.

Therefore, the weight average molecular weight of polylactic acid is preferably 500,000 or less, more preferably 400,000 or less, more preferably 300,000 or less. Thus, the weight average molecular weight of polylactic acid is preferably 80,000 to 500,000, more preferably 100,000 to 400,000, more preferably 130,000 to 300,000. When the weight average molecular weight exceeds 300,000, melt viscosity becomes too high, possibly making the melt film-forming difficult.

A ratio of weight average molecular weight (Mw) and number average molecular weight (Mn) is called molecular weight distribution (Mw/Mn). Larger molecular weight distribution means that the proportion of larger or smaller molecules than the average molecular weight is high.

Thus, for example, polylactic acid of weight average molecular weight of about 250,000 and molecular weight distribution of 3 or more possibly contains a high proportion of molecules with molecular weight above 250,000, causing high melt viscosity, which is not preferable for molding for the above-mentioned meaning. Also, polylactic acid of relatively small weight average molecular weight of about 80,000 and large molecular weight distribution possibly contains a high proportion of molecules with molecular weight below 80,000, causing poor durability of mechanical properties of the molded article, which is not preferable for usage. From this viewpoint, the range of molecular weight distribution is preferably 1.5 to 2.4, more preferably 1.6 to 2.4, more preferably 1.6 to 2.3.

Polylactic acid in the present invention may be used to form a film by contacting, preferably in a molten state, more preferably by melting and kneading, the poly-L-lactic acid component and poly-D-lactic acid component in a weight ratio of 10/90 to 90/10 as mentioned above. The obtained film may be subjected to the process such as stretching as needed to be used as a stereocomplex polylactic acid film mentioned above. The contact temperature of poly-L-lactic acid component and poly-D-lactic acid component is selected in the range of 210°C to 290°C, preferably 220 °C to 280°C, more preferably 225°C to 275°C, from a viewpoint of improvement of melt stability and stereocomplex crystallinity of polylactic acid.

Although the melt kneading method is not particularly limited, conventionally known batch type or continuous type melt kneading apparatus is suitably used. For example, a melting/stirring vessel, a single screw extruder, a twin screw extruder, a kneader, an anaxial basket-type stirring vessel, "Viborac (registered trade name)" manufactured by Sumitomo Heavy Industries, Ltd, N-SCR manufactured by Mitsubishi Heavy Industries, Ltd., a spectacle-shaped blade or lattice blade or a Kenix-type stirrer manufactured by Hitachi Ltd., or a tubular polymerizer equipped with a Sulzer-type SMLX static mixer, and the like may be used. Among them, a spectacle-shaped blade, an anaxial basket-type stirring vessel, N-SCR, a twin screw ruder, and the like, which are self cleaning type polymerizers, are suitably used from a viewpoint of productivity and quality, especially color hue, of polylactic acid.

Preferably, a specific additive may be added to polylactic acid of the present invention so long as it does not compromise the purpose of the present invention, in order to facilitate the formation of stereocomplex polylactic acid crystal in a stable and efficient manner.

For example, a phosphoric acid ester metal salt may be added as a stereocomplex crystallization promoter. As these phosphoric acid ester metal salts, "Adekastab (registered trade name)" NA-11 and "Adekastab (registered trade name)" NA-71 made by ADEKA Corporation, and the like are suitably exemplified.

It is preferable that the phosphoric acid ester metal salt be used in an amount of 0.001 to 2 wt%, preferably 0.005 to 1 wt%, more preferably 0.01 to 0.5 wt%, more preferably 0.02 to 0.3 wt% relative to the weight of polylactic acid. If the amount is too small, the effect to increase the stereocomplex crystallinity (S) is small. If the amount is too large, the melting point of the stereocomplex crystal unfavorably decreases.

Known nucleating agent for crystallization may be used in combination in order to enhance the effect of the phosphoric acid ester metal salt as needed. Among them, calcium silicate, talc, kaolinite, montmorillonite, and an organic amide compound may be suitably selected.

The amount of the above-mentioned nucleating agent for crystallization to be used is selected in the range of

0.03 to 5 wt%, preferably 0.04 to 2 wt%, more preferably 0.05 to 1 wt%, relative to polylactic acid.

The content of carboxylic acid group, which may be contained in polylactic acid through its production, should be as small as possible. For this reason, it is preferable to use the polymer obtained by ring opening polymerization of lactide using an initiator other than water or the polymer with carboxylic acid group minimized by a chemical treatment after polymerization.

Polylactic acid in the present invention may be copolymerized polylactic acid obtained by copolymerizing L-lactic acid or D-lactic acid with other components having an ester formation ability. As a copolymerizable component, hydroxycarboxylic acids such as glycolic acid, 3-hydroxybutyric acid, 4-hydroxybutyric acid, 4-hydroxyvaleric acid, 6-hydroxycaproic acid, as well as compounds having a plurality of hydroxylic groups in the molecule such as ethylene glycol, propyrene glycol, butanediol, neopentyl glycol, polyethylene glycol, glycerine, pentaerythritol, etc. or derivatives thereof, and compounds having a plurality of carboxylic acid groups in the molecule such as adipic acid, sebacic acid, fumaric acid, etc. and derivatives thereof are exemplified.

Various additives which are added in order to improve the properties of polylactic acid may deteriorate the optical properties in many cases. If these additives are used in combination with the amide compound of the present invention, the optical properties are not likely to be deteriorated.

For example, it is known that carbodiimide compounds are added in order to improve the hydrolysis resistance of polylactic acid. Although the optical properties are generally deteriorated when a carbodiimide compound is added, it is possible to satisfy both of the optical properties and hydrolysis resistance at a high level if the carbodiimide compound is used in combination with the amide compound of the present invention.

<Amide compound>

The most characteristic of the present invention is that the stereocomplex polylactic acid film contains the amide compound represented by the following general formula (1).

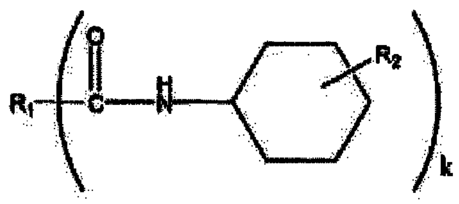

(1)

(wherein $R_1$ represents a residue obtainable by removing all carboxyl groups from 1,2,3-propane tricarboxylic acid or 1,2,3,4-butane tetracarboxylic acid; three or four $R_2$ may be the same as or different from each other and each represents a hydrogen atom or a linear or branched chain alkyl group having 1 to 10 carbon atoms; and k represents an integer of 3 or 4.)

Specific examples of the amide compound represented by the above general formula (1) include 1,2,3-propanetricarboxylic acid tricyclohexylamide, 1,2,3-propanetricarboxylic acid tri(2-methylcyclohexylamide), 1,2,3-propanetricarboxylic acid tri(3-methylcyclohexylamide), 1,2,3-propanetricarboxylic acid tri(4-methylcyclohexylamide), 1,2,3-propanetricarboxylic acid tri(2-ethylcyclohexylamide), 1,2,3-propanetricarboxylic acid tri(3-ethylcyclohexylamide), 1,2,3-propanetricarboxylic acid tri(4-ethylcyclohexylamide), 1,2,3-propanetricarboxylic acid tri(2-n-propylcyclohexylamide), 1,2,3-propanetricarboxylic acid tri(3-n-propylcyclohexylamide), 1,2,3-propanetricarboxylic acid tri(4-n-propylcyclohexylamide), 1,2,3-propanetricarboxylic acid tri(2-isopropylcyclohexylamide), 1,2,3-propanetricarboxylic acid tri(3-isopropylcyclohexylamide), 1,2,3-propanetricarboxylic acid tri(4-isopropylcyclohexylamide), 1,2,3-propanetricarboxylic acid tri(2-n-butylcyclohexylamide), 1,2,3-propanetricarboxylic acid tri(3-n-butylcyclohexylamide), 1,2,3-propanetricarboxylic acid tri(4-n-butylcyclohexylamide), 1,2,3-propanetricarboxylic acid tri(2-isobutylcyclohexylamide), 1,2,3-propanetricarboxylic acid tri(3-isobutylcyclohexylamide), 1,2,3-propanetricarboxylic acid tri(4-isobutylcyclohexylamide), 1,2,3-propanetricarboxylic acid tri(2-sec-butylcyclohexylamide), 1,2,3-propanetricarboxylic acid tri(3-sec-butylcyclohexylamide), 1,2,3-propanetricarboxylic acid tri(4-sec-butylcyclohexylamide), 1,2,3-propanetricarboxylic acid tri(2-tert-butylcyclohexylamide), 1,2,3-propanetricarboxylic acid tri(3-tert-butylcyclohexylamide), 1,2,3-propanetricarboxylic acid tri(4-tert-butylcyclohexylamide), 1,2,3-propanetricarboxylic acid tri(4-n-pentylcyclohexylamide), 1,2,3-propanetricarboxylic acid tri(4-n-hexylcyclohexylamide), 1,2,3-propanetricarboxylic acid tri(4-n-heptylcyclohexylamide), 1,2,3-propanetricarboxylic acid tri(4-n-octylcyclohexylamide), 1,2,3-propanetricarboxylic acid tri[4-(2-ethylhexyl)cyclohexylamide], 1,2,3-propanetricarboxylic acid tri(4-n-nonylcyclohexylamide), 1,2,3-propanetricarboxylic acid tri(4-n-decylcyclohexylamide), 1,2,3-propanetricarboxylic acid [(cyclohexylamide)di(2-methylcyclohexylamide)], 1,2,3-propanetricarboxylic acid [di(cyclohexylamide)(2-methylcyclohexylamide)], 1,2,3,4-butanetetracarboxylic acid tetracyclohexylamide, 1,2,3,4-butanetetracarboxylic acid tetra(2-methylcyclohexylamide), 1,2,3,4-butanetetracarboxylic acid tetra(3-methylcyclohexylamide), 1,2,3,4-butanetetracarboxylic acid tetra(4-methylcyclohexylamide), 1,2,3,4-butanetetracarboxylic acid tetra(2-ethylcyclohexylamide), 1,2,3,4-butanetetracarboxylic acid tetra(3-ethylcyclohexylamide), 1,2,3,4-butanetetracarboxylic acid tetra(4-ethylcyclohexylamide), 1,2,3,4-butanetetracarboxylic acid tetra(2-n-propylcyclohexylamide), 1,2,3,4-butanetetracarboxylic acid tetra(3-n-propylcyclohexylamide), 1,2,3,4-butanetetracarboxylic acid tetra(4-n-propylcyclohexylamide), 1,2,3,4-butanetetracarboxylic acid tetra(2-isopropylcyclohexylamide), 1,2,3,4-butanetetracarboxylic acid tetra(3-isopropylcyclohexylamide), 1,2,3,4-butanetetracarboxylic acid tetra(4-isopropylcyclohexylamide), 1,2,3,4-butanetetracarboxylic acid tetra(2-n-butylcyclohexylamide), 1,2,3,4-butanetetracarboxylic acid tetra(3-n-butylcyclohexylamide), 1,2,3,4-butanetetracarboxylic acid tetra(4-n-butylcyclohexylamide), 1,2,3,4-butanetetracarboxylic acid tetra(2-isobutylcyclohexylamide), 1,2,3,4-butanetetracarboxylic acid tetra(3-isobutylcyclohexylamide), 1,2,3,4-butanetetracarboxylic acid tetra(4-isobutylcyclohexylamide), 1,2,3,4-butanetetracarboxylic acid tetra(2-sec-butylcyclohexylamide), 1,2,3,4-butanetetracarboxylic acid tetra(3-sec-butylcyclohexylamide), 1,2,3,4-butanetetracarboxylic acid tetra(4-sec-butylcyclohexylamide), 1,2,3,4-butanetetracarboxylic acid tetra(2-tert-butylcyclohexylamide), 1,2,3,4-butanetetracarboxylic acid tetra(3-tert-butylcyclohexylamide), 1,2,3,4-butanetetracarboxylic acid tetra(4-tert-butylcyclohexylamide), 1,2,3,4-butanetetracarboxylic acid tetra(4-n-pentylcyclohexylamide), 1,2,3,4-butanetetracarboxylic acid tetra(4-n-hexylcyclohexylamide), 1,2,3,4-butanetetracarboxylic acid tetra(4-n-heptylcyclohexylamide), 1,2,3,4-butanetetracarboxylic acid tetra(4-n-octylcyclohexylamide), 1,2,3,4-butanetetracarboxylic acid tetra[4-(2-ethylhexyl)cyclohexylamide], 1,2,3,4-butanetetracarboxylic acid tetra(4-n-nonylcyclohexylamide), 1,2,3,4-butanetetracarboxylic acid tetra(4-n-decylcyclohexylamide), 1,2,3,4-butanetetracarboxylic acid [di(cyclohexylamide)di(2-methylcyclohexylamide)], etc.

Among the above-mentioned amide compounds, the amide compound wherein $R_2$ in the above general formula (1) is a hydrogen atom or a linear or branched chain alkyl group with 1 to 4 carbon atoms is preferred.

Specifically, 1,2,3-propanetricarboxylic acid tricyclohexylamide, 1,2,3-propanetricarboxylic acid tri(2-methylcyclohexylamide), 1,2,3-propanetricarboxylic acid tri(3-methylcyclohexylamide), 1,2,3-propanetricarboxylic acid tri(4-methylcyclohexylamide), 1,2,3-propanetricarboxylic acid tri(2-ethylcyclohexylamide), 1,2,3-propanetricarboxylic acid tri(3-ethylcyclohexylamide), 1,2,3-propanetricarboxylic acid tri(4-ethylcyclohexylamide), 1,2,3-propanetricarboxylic acid tri(2-n-propylcyclohexylamide), 1,2,3-propanetricarboxylic acid tri(3-n-propylcyclohexylamide), 1,2,3-propanetricarboxylic acid tri(4-n-propylcyclohexylamide), 1,2,3-propanetricarboxylic acid tri(2-isopropylcyclohexylamide), 1,2,3-propanetricarboxylic acid tri(3-isopropylcyclohexylamide), 1,2,3-propanetricarboxylic acid tri(4-isopropylcyclohexylamide), 1,2,3-propanetricarboxylic acid tri(2-n-butylcyclohexylamide), 1,2,3-propanetricarboxylic acid tri(3-n-butylcyclohexylamide), 1,2,3-propanetricarboxylic acid tri(4-n-butylcyclohexylamide), 1,2,3-propanetricarboxylic acid tri(2-isobutylcyclohexylamide), 1,2,3-propanetricarboxylic acid tri(3-isobutylcyclohexylamide), 1,2,3-propanetricarboxylic acid tri(4-isobutylcyclohexylamide), 1,2,3-propanetricarboxylic acid tri(2-sec-butylcyclohexylamide), 1,2,3-propanetricarboxylic acid tri(3-sec-butylcyclohexylamide), 1,2,3-propanetricarboxylic acid tri(4-sec-butylcyclohexylamide), 1,2,3-propanetricarboxylic acid tri(2-tert-butylcyclohexylamide), 1,2,3-propanetricarboxylic acid tri(3-tert-butylcyclohexylamide), 1,2,3-propanetricarboxylic acid tri(4-tert-butylcyclohexylamide), 1,2,3,4-butanetetracarboxylic acid tetracyclohexylamide, 1,2,3,4-butanetetracarboxylic acid tetra(2-methylcyclohexylamide), 1,2,3,4-butanetetracarboxylic acid tetra(3-methylcyclohexylamide), 1,2,3,4-butanetetracarboxylic acid tetra(4-methylcyclohexylamide), 1,2,3,4-butanetetracarboxylic acid tetra(2-ethylcyclohexylamide), 1,2,3,4-butanetetracarboxylic acid tetra(3-ethylcyclohexylamide), 1,2,3,4-butanetetracarboxylic acid tetra(4-ethylcyclohexylamide), 1,2,3,4-butanetetracarboxylic acid tetra(2-n-propylcyclohexylamide), 1,2,3,4-butanetetracarboxylic acid tetra(3-n-propylcyclohexylamide), 1,2,3,4-butanetetracarboxylic acid tetra(4-n-propylcyclohexylamide), 1,2,3,4-butanetetracarboxylic acid tetra(2-isopropylcyclohexylamide), 1,2,3,4-butanetetracarboxylic acid tetra (3-isopropylcyclohexylamide), 1,2,3,4-butanetetracarboxylic acid tetra(4-isopropylcyclohexylamide), 1,2,3,4-butanetetracarboxylic acid tetra(2-n-butylcyclohexylamide), 1,2,3,4-butanetetracarboxylic acid tetra(3-n-butylcyclohexylamide), 1,2,3,4-butanetetracarboxylic acid tetra(4-n-butylcyclohexylamide), 1,2,3,4-butanetetracarboxylic acid tetra(2-isobutylcyclohexylamide), 1,2,3,4-butanetetracarboxylic acid tetra(3-isobutylcyclohexylamide), 1,2,3,4-butanetetracarboxylic acid tetra(4-isobutylcyclohexylamide), 1,2,3,4-butanetetracarboxylic acid tetra(2-sec-butylcyclohexylamide), 1,2,3,4-butanetetracarboxylic acid tetra(3-sec-butylcyclohexylamide), 1,2,3,4-butanetetracarboxylic acid tetra(4-sec-butylcyclohexylamide), 1,2,3,4-butanetetracarboxylic acid tetra(2-tert-butylcyclohexylamide), 1,2,3,4-butanetetracarboxylic acid tetra(3-tert-butylcyclohexylamide), 1,2,3,4-butanetetracarboxylic acid tetra(4-tert-butylcyclohexylamide), etc. are exemplified.

Among these preferred amide compounds, the amide compound wherein $R_2$ in the above general formula (1) is a hydrogen atom or a methyl group is especially preferred from a viewpoint of the balance of transparency and stiffness of the film obtained and availability of the raw material of the amide compound. Specifically, 1,2,3-propanetricarboxylic acid tricyclohexylamide, 1,2,3-propanetricarboxylic acid tri(2-methylcyclohexylamide), 1,2,3-propanetricarboxylic acid tri(3-methylcyclohexylamide), 1,2,3-propanetricarboxylic acid tri(4-methylcyclohexylamide), 1,2,3,4-butanetetracarboxylic acid tetracyclohexylamide, 1,2,3,4-butanetetracarboxylic acid tetra(2-methylcyclohexylamide), 1,2,3,4-butanetetracarboxylic acid tetra(3-methylcyclohexylamide), 1,2,3,4-butanetetracarboxylic acid tetra(4-methylcyclohexylamide), etc. are exemplified.

In addition, when improvement effect of transparency is especially required, the amide compound wherein $R_1$

in the above general formula (1) is a residue obtainable by removing all carboxyl groups from 1,2,3-propane tricarboxylic acid is especially preferred. Specifically, 1,2,3-propanetricarboxylic acid tricyclohexylamide, 1,2,3-propanetricarboxylic acid tri(2-methylcyclohexylamide), 1,2,3-propanetricarboxylic acid tri(3-methylcyclohexylamide), 1,2,3-propanetricarboxylic acid tri(4-methylcyclohexylamide), etc. are exemplified.

Among them, 1,2,3-propanetricarboxylic acid tri(2-methylcyclohexylamide) represented by the following formula (2) is preferred from a viewpoint of the effect and availability of the raw material.

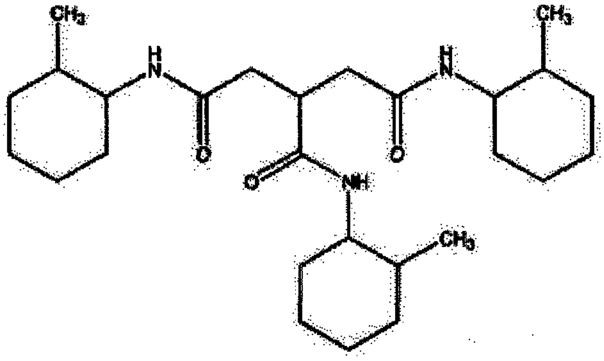

(2)

The above-mentioned amide compounds may be used alone or in combination of two or more kinds as needed.

The crystal form of the amide compound of the present invention is not particularly limited so long as the effect of the present invention is achieved and any crystal forms such as hexagonal crystal, monoclinic crystal, cubical crystal, etc. may be used. These crystals are known or may be produced according to known methods.

Although it is preferable that the purity of the amide compound of the present invention be substantially 100%, it may contain some impurities. Even if the amide compound contains some impurities, recommended purity of the amide compound is preferably 90wt% or more, more preferably 95wt% or more, especially preferably 97wt% or more. As the impurities, monoamide of dicarboxylic acid or its ester compound or diamide of monocarboxylic acid or its ester compound, both derived from reaction intermediate or unreacted substance, and imide compound derived from side reaction, and the like are exemplified.

The production method of the amide compound of the present invention is not particularly limited so long as the intended amide compound is obtainable. For example, the amide compound may be produced from a specific aliphatic polycarboxylic acid component and a specific alicyclic monoamine component according to a conventionally known method (For example, a specific aliphatic polycarboxylic acid and a specific alicyclic monoamine in the amount of 3 to 20 equivalents relative to the acid are reacted in an inert solvent at 60°C to 200°C for 2 to 10 hours, as described in Japanese Patent Laid-open publication H07-24261 0.).

As the above-mentioned aliphatic polycarboxylic acid component, 1,2,3-propanetricarboxylic acid, 1,2,3,4-butanetricarboxylic acid and derivatives thereof, such as acid chloride or anhydride or ester with a lower alcohol having 1 to 4 carbon atoms are exemplified. These aliphatic polycarboxylic acid components may be subjected to the amide production alone or in the mixture of two kinds.

The above-mentioned alicyclic monoamine component is at least one kind selected from a group consisting of cyclohexylamine and cyclohexylamine substituted with a linear or branched chain alkyl group having 1 to 10 (preferably 1 to 4) carbon atoms. They may be subjected to the amide production alone or in the mixture of two or more kinds.

Specifically, cyclohexylamine, methylcyclohexylamines such as 2-methylcyclohexylamine, 3-methylcyclohexylamine, 4-methylcyclohexylamine, 2-ethylcyclohexylamine, 2-n-propylcyclohexylamine, 2-isopropylcyclohexylamine, 2-n-butylcyclohexylamine, 2-isobutylcyclohexylamine, 2-sec-butylcyclohexylamine, 2-tert-butylcyclohexylamine, etc. are exemplified.

The above-mentioned alkyl-substituted cyclohexylamine may be any of cis-isomer, trans-isomer, and the mixture of these stereoisomers. Preferred ratio of the cis-isomer: trans-isomer is in the range of 50:50 to 0:100, the range of 35:65 to 0:100 being especially preferable.

Although particle diameter of the amide compound of the present invention is not particularly limited so long as the effect of the present invention is achieved, it is preferable that the particle diameter be as small as possible from a viewpoint of the rate of dissolution (or time of dissolution) to the molten resin. When the particle diameter is measured by laser diffraction light scattering method, recommended maximum particle diameter of the amide compound is 200 μm or less, preferably 100 μm or less, more preferably 50 μm or less, especially 10 μm or less.

As the method to adjust the maximum particle diameter to the above range, a pulverizing apparatus known in the art may be generally used and a known classification apparatus may be used as needed. Specifically, a fluidized bed counter jet mill 100AFG (trade name, manufactured by Hosokawa Micron Group), a supersonic jet mill PJM-200

(trade name, manufactured by Nippon Pneumatic MFG Co., Ltd.), a pin mill, etc. are exemplified as the pulverizing apparatus and a vibration sifter, a dry-type classifier (such as Cyclone and Micron Separator), etc. are exemplified as the classification apparatus.

<Mixing method of amide compound and stereocomplex polylactic acid>

The method to add the amide compound to stereocomplex polylactic acid in the present invention is not particularly limited and conventionally known various methods may be used as needed. For example, the compounds may be mixed using a tumbler, a V-type blender, Supermixer, Nauta mixer, Banbury mixer, a kneading roll, a single screw or twin screw extruder, or the like.

In addition, it is also possible to prepare in advance a masterbatch containing the amide compound of the present invention in high concentration and knead it with stereocomplex polylactic acid prepared separately to adjust to the intended additive concentration.

<Production method of the stereocomplex polylactic acid film>

The production method of the stereocomplex polylactic film is not particularly limited and it may be produced according to a known method. For example, the film is formed by extrusion molding using an extruder and the like equipped with I-dye, T-dye, circular dye, etc.

In the case of extrusion molding, the shaped article may be produced by extruding the molten resin onto a cooling drum to adhere and cool the molten resin onto the rotating cooling drum. In order to tightly adhere the molten resin onto the cooling drum, techniques such as increasing the temperature of the casting drum, nipping the resin with the rolls, or electrostatic adhesion may be used. When an electrostatic adhesion method is used, an unstretched film with few surface defects may be obtained by admixing an electrostatic adhesive agent such as a quarternary phosphonium salt of sulfonic acid and applying a charge from the electrode to the molten surface of the film without contact, thereby tightly adhering the film to the rotating cooling drum.

In addition, the unstretched film may be cast molded by using a solvent which dissolves the resin composition, for example, such as chloroform and methylene dichloride, to make a solution followed by cast-drying and solidifying.

The unstretched film may be subjected to the uniaxial stretching in the direction of the mechanical flow or to the uniaxial stretching in the transverse direction, perpendicular to the the direction of the mechanical flow. In addition, a biaxially stretched film may be produced by stretching according to a sequential biaxial stretching using a roll and tenter, a simultaneous biaxial stretching using a tenter, a biaxial stretching by tubular stretching, etc.

Although the stretching ratio is not particularly limited, the stereocomplex polylactic acid film of the present invention is excellent in transparency after crystallization even without a stretching treatment or with a low stretching ratio.

The film is crystallized by heat treatment. The technique and time of the heat treatment are not particularly limited so long as the temperature is the crystallization temperature (Tc) - 20°C or above and the melting temperature (Tm) - 20°C or below.

In addition, the film of the present invention may be provided with other functional layer using the conventionally known method as needed. For example, easily adhesive layer, transparent conductive layer, easily lubricant layer, hard coat layer, adhesive layer, etc. may be exemplified. In addition, surface activation treatments such as UV ozone treatment, plasma treatment, amine treatment, corona treatment, acid treatment and alkaline treatment are possible.

[Examples]

Hereinafter, the present invention will be illustrated in more detail referring to the examples. The present invention is in no way limited by these examples. It should be noted that each value in the present invention was determined by the following methods.

<Evaluation method>

(1) Weight average molecular weight (Mw) and number average molecular weight (Mn) of polymer:

Weight average molecular weight and number average molecular weight of polymer were measured by gel permeation chromatography (GPC) and converted to the standard polystyrene. The GPC measuring apparatus comprising a detector, RID-6A differential refractometer manufactured by Shimadzu Corporation., and a column, TSK gel G3000HXL, TSK gel G4000HXL, TSK gel G5000HXL and TSK guard column HXL-L manufactured by

Tosoh Corporation connected in series or a column, TSK gel G2000HXL, TSK gel G3000HXL and TSK guard column HXL-L manufactured by Tosoh Corporation connected in series was used.
The measurement was performed using chloroform as an eluting solvent and injecting 10 μl of the sample with a concentration of 1 mg/ml (chloroform containing 1% hexafluoroisopropanol) at a temperature of 40°C and a flow rate of 1.0 ml/min.

(2) Glass transition temperature (Tg), crystallization temperature (Tc), melting temperature (Tm), heat of crystallization (ΔHc), heat of crystal fusion (ΔHm), crystallinity (C), stereocomplex crystallinity (S):

These items were measured using DSC2920 Modulated DSC manufactured by TA Instruments, at the first temperature elevation with a temperature elevation rate of 20°C/min.

(3) Haze:

Haze was measured using a hazemeter (MDH2000) manufactured by Nippon Denshoku Industries Co., Ltd.

(4) Thickness:

Thickness was measured using an electron micrometer manufactured by Anritsu.

(5) In-plane retardation (R) and out-of-plane retardation (Rth):

Measurement was done using a spectroscopic ellipsometer (M150) manufactured by JASCO Corporation.

(6) Dimension change rate:

The distance between two points marked in advance on the film was measured using a real-time scanning laser microscope (trade name "1LM21D") manufactured by Lasertec Corporation. The dimension change rate was obtained as an absolute value from the change of distance between the two points before and after heat treatment divided by the value before heat treatment.

(7) Brightness with crossed Nicol arrangement:

This was evaluated from the brightness when a sample film was inserted between a pair of polarizing plates disposed in a crossed Nicol arrangement on the backlight at an angle to give the minimum brightness of the transmitted light. The brightness of the transmitted light when the film was not inserted was 0.05 cd/$m^2$ and the polarization degree of the polarizing plate used was 99.8%.

(8) Adhesive strength of the polarizing plate

The adhesive strength was rated "good" when the adhered interface between the polarizing plates prepared was not peeled off by inserting a cutter blade. The adhesive strength was rated "poor" when the interface was peeled off.

(9) Comprehensive evaluation

The sample with the haze of 1% or less and the brightness in the crossed Nicol arrangement of 1 cd/$m^2$ or less was rated "good". Other samples were rated "poor".

<Preparation of stereocomplex polylactic acid resin>

(1) Stereocomplex polylactic acid resin (A1);

To 100 parts in weight of L-lactide (manufactured by Musashino Chemical Laboratory, Ltd., optical purity 100%) was added 0.005 parts in weight of tin octylate and allowed to react for 2 hours at 180°C under a nitrogen atmosphere in a reactor equipped with a stirring blade. Phosphoric acid of 1.2 equivalents relative to tin octylate was added. Remaining lactide was then removed under a reduced pressure of 13.3 Pa, followed by cutting into chips to obtain poly-L-lactic acid (L1). The weight average molecular weight of poly-L-lactic acid (L1) obtained was 152,000, glass transition temperature

(Tg) was 55°C and melting temperature was 175°C.

Poly-D-lactic acid (D1) was obtained by performing the polymerization under the same conditions as the preparation of poly-L-lactic acid mentioned above, except that L-lactide was replaced by D-lactide (manufactured by Musashino Chemical Laboratory, Ltd., optical purity 100%). The weight average molecular weight of poly-D-lactic acid (D1) obtained was 151,000, glass transition temperature (Tg) was 55°C and melting temperature was 175°C.

Each of 50 parts in weight of poly-L-lactic acid (L1) and poly-D-lactic acid (D1) obtained by the above two operations and a phosphoric acid ester metal salt ("Adekastab (registered trade name)" NA-71 manufactured by ADEKA Corporation, 0.1 parts in weight) were supplied through the first supply inlet of a twin screw kneader and melt kneaded at a cylinder temperature of 250°C, extruded as a strand into a water vessel, cut into chips using a chip cutter to obtain the stereocomplex polylactic acid resin (A1). The stereocomplex crystallinity (S) was 100%, glass transition temperature (Tg) was 55°C and the melting temperature (Tm) was 216°C.

(2) Stereocomplex polylactic acid resin (A2):

Ninety-five parts in weight of the stereocomplex polylactic acid resin (A1) and 5 parts in weight of "Acrypet (registered trade name)" VH001, or polymethyl methacrylate manufactured by Mitsubishi Rayon Co., Ltd., were dried at 100°C for 5 hours under vacuum and supplied through the first supply inlet of a kneader. Through the second supply inlet was supplied 0.3 parts in weight of the amide compound represented by the following formula (2), or "Rikaclear (registered trade name)" PC1 manufactured by New Japan Chemical Co., Ltd., melt kneaded at a cylinder temperature of 230°C and a vent pressure of 13.3 Pa under vacuum evacuation, extruded as a strand into a water vessel, cut into chips using a chip cutter to obtain the stereocomplex polylactic acid resin (A2).

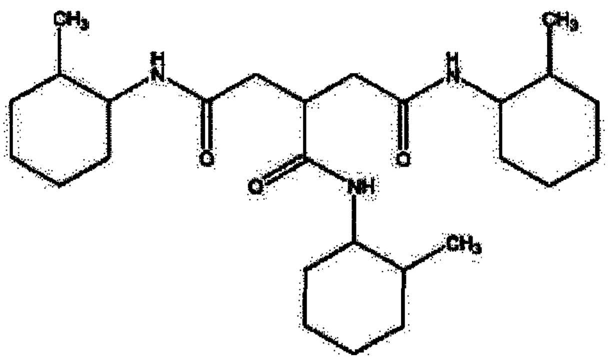

(2)

[Example 1]

The stereocomplex polylactic acid resin (A1) was vacuum dried at 110°C for 5 hours. Then, 0.3 parts in weight of the amide compound represented by the following formula (2), or "Rikaclear (registered trade name)" PC1 manufactured by New Japan Chemical Co., Ltd., was added to 100 parts in weight of the stereocomplex polylactic acid resin (A1) and the mixture was dry blended.

The blend was melt kneaded in an extruder at 230°C, melt extruded as a film through a T-die at a die temperature of 230°C, adhered to and solidified on the surface of a cooling drum at 40°C, and peeled off to obtain a film. This film was further heat set at a temperature of 125°C to obtain the stereocomplex polylactic acid film. When the film obtained was heat treated at 120°C for 60 minutes, the absolute value of the dimension change rate was 3% or less.

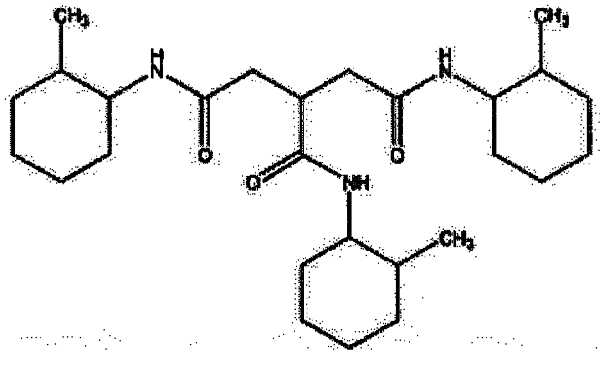

(2)

[Example 2]

The stereocomplex polylactic acid resin (A2) was vacuum dried at 110°C for 5 hours. Then, the resin was melt kneaded in an extruder at 230°C, melt extruded as a film through a T-die at a die temperature of 230°C, adhered to and solidified on the surface of a cooling drum at 40°C, and peeled off to obtain a film. The film obtained was further heat set at a temperature of 125°C to obtain the stereocomplex polylactic acid film. When the film obtained was heat treated at 120°C for 60 minutes, the absolute value of the dimension change rate was 3% or less.

[Example 3]

The stereocomplex polylactic acid resin (A1) was vacuum dried at 110°C for 5 hours. Then, 0.4 parts in weight of the amide compound represented by the following formula (2) ("Rikaclear (registered trade name)" PC1 manufactured by New Japan Chemical Co., Ltd.) and 0.8 parts in weight of a cyclic carbodiimide compound having a structure represented by the following formula (3) were added to 100 parts in weight of the stereocomplex polylactic acid resin (A1) and the mixture was dry blended. The blend was melt kneaded in an extruder at 230°C, melt extruded as a film through a T-die at a die temperature of 230°C, adhered to and solidified on the surface of a cooling drum at 40°C, and peeled off to obtain a film. The film obtained was further heat set at a temperature of 125°C to obtain the stereocomplex polylactic acid film. When the film obtained was heat treated at 120°C for 60 minutes, the absolute value of the dimension change rate was 3% or less.

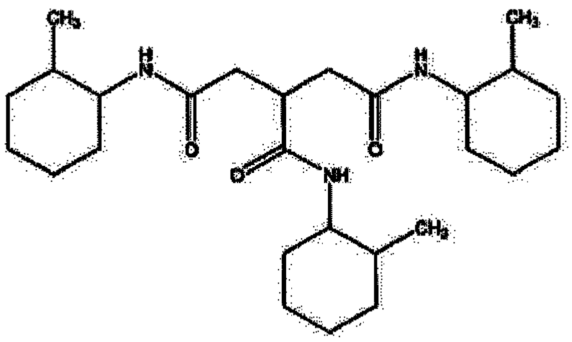

(2)

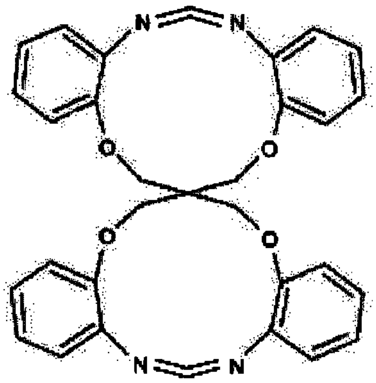

(3)

The cyclic carbodiimide compound of the above formula (3) was obtained by the following operation according to the description in Example 2 of International Publication 2010/071211.

A reaction apparatus equipped with a stirrer and a heater was charged with o-nitrophenol (0.11 mol), pentaerythrityl tetrabromide (0.025 mol), potassium carbonate (0.33 mol) and N,N-dimethylformamide (200 ml) under a nitrogen atmosphere. The mixture was allowed to react at 130°C for 12 hours. DMF was removed by reduced pressure. The solid obtained was dissolved into 200 ml of dichloromethane and separated three times with 100 ml of water. The organic layer was dehydrated with 5 g of sodium sulfate and dichloromethane was removed by reduced pressure to obtain the intermediate product (nitro body).

Then, the intermediate product (nitro body) (0.1 mol), 5% palladium carbon (Pd/C) (2 g), and 400 ml of ethanol/dichloromethane (70/30) were charged into a reaction apparatus equipped with a stirrer. The apparatus was replaced

with hydrogen five times. The mixture was allowed to react with hydrogen continuously supplied at 25°C. The reaction was terminated when reduction of hydrogen stopped. Pd/C was recovered and the mixed solvent was removed to obtain the intermediate product (amine body).

Then, a reaction apparatus equipped with a stirrer, a heater and a dripping funnel was charged with triphenylphosphine dibromide (0.11 mol) and 150 ml of 1,2-dichloroethane under a nitrogen atmosphere. To this mixture a solution of the intermediate product (amine body) (0.025 mol) and triethylamine (0.25 mol) in 50 ml of 1,2-dichloroethane was added dropwise slowly at 25°C under stirring. After completion of the addition, the mixture was allowed to react at 70°C for 5 hours.

Then, the reaction solution was filtered and the filtrate was separated five times with 100 ml of water. The organic layer was dehydrated with 5 g of sodium sulfate and 1,2-dichloroethane was removed by reduced pressure to obtain the intermediate product (triphenylphosphine body).

Then, a reaction apparatus equipped with a stirrer and a dripping funnel was charged with di-tert-butyl dicarbonate (0.11 mol), N,N-dimethyl-4-aminopyridine (0.055 mol) and 150 ml of dichloromethane under a nitrogen atmosphere and the resultant mixture was stirred. To this mixture a solution of the intermediate product (triphenylphosphine body) (0.025 mol) dissolved in 100 ml of dichloromethane was added dropwise slowly at 25°C. After completion of the addition, the mixture was allowed to react for 12 hours. Then, dichloromethane was removed and the solid obtained was purified to obtain the cyclic carbodiimide compound.

[Example 4]

The film obtained in Example 3 was fixed on a metal frame and heat treated at 90°C for 50 hours to obtain the stereocomplex polylactic acid film When the film obtained was heat treated at 120°C for 60 minutes, the absolute value of the dimension change rate was 3% or less.

[Comparative Example 1]

The stereocomplex polylactic acid resin (A1) was vacuum dried at 110°C for 5 hours. Then, the resin was melt kneaded in an extruder at 230°C, melt extruded as a film through a T-die at a die temperature of 230°C, adhered to and solidified on the surface of a cooling drum at 40°C, and peeled off to obtain a film. The film obtained was heat set at a temperature of 125°C to obtain the stereocomplex polylactic acid film. When the film obtained was heat treated at 120°C for 60 minutes, the absolute value of the dimension change rate was 3% or less.

[Comparative Example 2]

The stereocomplex polylactic acid resin (A1) was vacuum dried at 110°C for 5 hours. Then, 0.3 parts in weight of the amide compound represented by the following formula (4) and commercially available as a nucleating agent for polyolefin resin, "NJSTAR (registered trade name)" NU100 manufactured by New Japan Chemical Co., Ltd., was added to 100 parts in weight of the stereocomplex polylactic acid resin (A1) and the mixture was dry blended. The blend was melt kneaded in an extruder at 230°C, melt extruded as a film through a T-die at a die temperature of 230°C, adhered to and solidified on the surface of a cooling drum at 40°C, and peeled off to obtain a film. The film obtained was heat set at a temperature of 125°C to obtain the stereocomplex polylactic acid film. When the film obtained was heat treated at 120°C for 60 minutes, the absolute value of the dimension change rate was 3% or less.

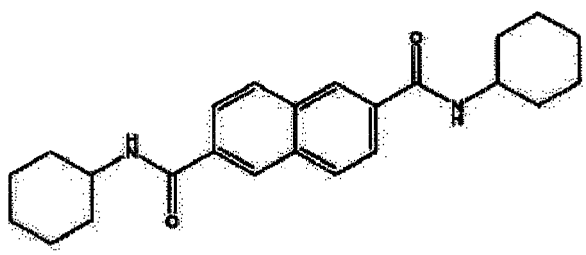

(4)

[Comparative Example 3]

Poly-L-lactic acid (L1) was vacuum dried at 110°C for 5 hours. Then, 0.3 parts in weight of the amide compound represented by the following formula (2), or "Rikaclear (registered trade name)" PC1 manufactured by New Japan Chemical Co., Ltd., was added to 100 parts in weight of poly-L-lactic acid (L1) and the mixture was dry blended. The

blend was melt kneaded in an extruder at 230°C, melt extruded as a film through a T-die at a die temperature of 230°C, adhered to and solidified on the surface of a cooling drum at 40°C, and peeled off to obtain a film. The film obtained was heat set at a temperature of 125°C to obtain the polylactic acid film. When the film obtained was heat treated at 120°C for 60 minutes, the absolute value of the dimension change rate was 3% or less.

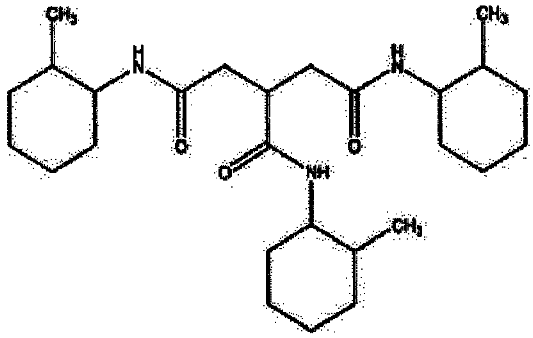

(2)

[Comparative Example 4]

Poly-L-lactic acid (L1) was vacuum dried at 110°C for 5 hours. Then, 0.3 parts in weight of the amide compound represented by the following formula (4) and commercially available as a nucleating agent for polyolefin resin, "NJSTAR (registered trade name)" NU 100 manufactured by New Japan Chemical Co., Ltd., was added to 100 parts in weight of poly-L-lactic acid resin (L1) and the mixture was dry blended. The blend was melt kneaded in an extruder at 230°C, melt extruded as a film through a T-die at a die temperature of 230°C, adhered to and solidified on the surface of a cooling drum at 40°C, and peeled off to obtain a film. The film obtained was heat set at a temperature of 125°C to obtain the polylactic acid film. When the film obtained was heat treated at 120°C for 60 minutes, the absolute value of the dimension change rate was 3% or less.

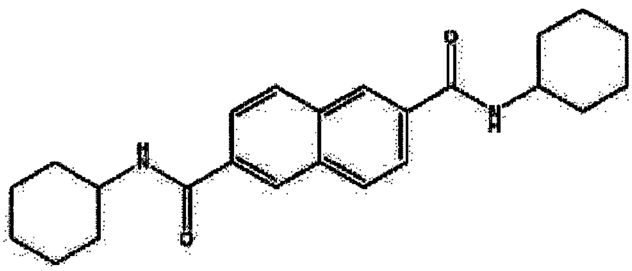

(4)

[Comparative Example 5]

The stereocomplex polylactic acid resin (A1) was vacuum dried at 110°C for 5 hours. Then, 0.3 parts in weight of the amide compound represented by the following formula (5) and commercially available as a heavy metal inactivating agent for polyolefin, "Adekastab (registered trade name)" CDA-1 manufactured by ADEKA Corporation, was added to 100 parts in weight of the stereocomplex polylactic acid resin (A1) and the mixture was dry blended. The blend was melt kneaded in an extruder at 230°C, melt extruded as a film through a T-die at a die temperature of 230°C, adhered to and solidified on the surface of a cooling drum at 40°C, and peeled off to obtain a film. The film obtained was heat set at a temperature of 125°C to obtain the stereocomplex polylactic acid film. When the film obtained was heat treated at 120°C for 60 minutes, the absolute value of the dimension change rate was 3% or less.

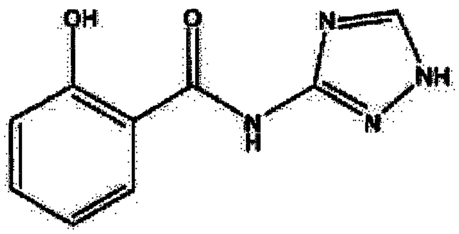

(5)

[Comparative Example 6]

The stereocomplex polylactic acid resin (A1) was vacuum dried at 110°C for 5 hours. Then, 0.3 parts in weight of the hydrazide compound represented by the following formula (6) and commercially available as a heavy metal inactivating agent, "Adekastab (registered trade name)" CDA-6 manufactured by ADEKA Corporation, was added to 100 parts in weight of the stereocomplex polylactic acid resin (A1) and the mixture was dry blended. The blend was melt kneaded in an extruder at 230°C, melt extruded as a film through a T-die at a die temperature of 230°C, adhered to and solidified on the surface of a cooling drum at 40°C, and peeled off to obtain a film. The film obtained was heat set at a temperature of 125°C to obtain the stereocomplex polylactic acid film When the film obtained was heat treated at 120°C for 60 minutes, the absolute value of the dimension change rate was 3% or less.

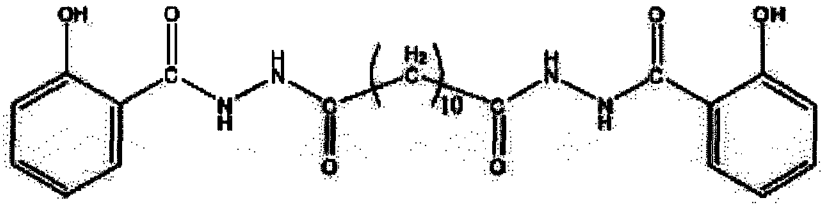

(6)

[Comparative Example 7]

The stereocomplex polylactic acid resin (A1) was vacuum dried at 110°C for 5 hours. Then, 0.3 parts in weight of zinc phenylphosphonate represented by the following formula (7) and commercially available as a crystal nucleating agent for polylactic acid ("Ecopromote (registered trade name)" NP) manufactured by Nissan Chemical Industries, Ltd., was added to 100 parts in weight of the stereocomplex polylactic acid resin (A1) and the mixture was dry blended. The blend was melt kneaded in an extruder at 230°C, melt extruded as a film through a T-die at a die temperature of 230°C, adhered to and solidified on the surface of a cooling drum at 40°C, and peeled off to obtain a film. The film obtained was heat set at a temperature of 125°C to obtain the stereocomplex polylactic acid film. When the film obtained was heat treated at 120°C for 60 minutes, the absolute value of the dimension change rate was 3% or less.

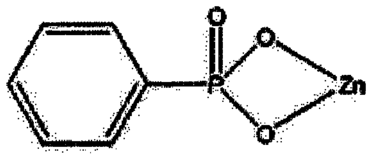

(7)

[Comparative Example 8]

The stereocomplex polylactic acid resin (A1) was vacuum dried at 110°C for 5 hours. Then, 0.3 parts in weight of talc FG-15 manufactured by Nippon Talc Co., Ltd. was added to 100 parts in weight of the stereocomplex polylactic acid resin (A1) and the mixture was dry blended. The blend was melt kneaded in an extruder at 230°C, melt extruded as a film through a T-die at a die temperature of 230°C, adhered to and solidified on the surface of a cooling drum at 40°C, and peeled off to obtain a film. The film obtained was heat set at a temperature of 125°C to obtain the stereocomplex polylactic acid film. When the film obtained was heat treated at 120°C for 60 minutes, the absolute value of the dimension change rate was 3% or less.

[Comparative Example 9]

The stereocomplex polylactic acid resin (A1) was vacuum dried at 110°C for 5 hours. Then, 0.8 parts in weight of the cyclic carbodiimide compound having a structure represented by the following formula (3) was added to 100 parts in weight of the stereocomplex polylactic acid resin (A1) and the mixture was dry blended. The blend was melt kneaded in an extruder at 230°C, melt extruded as a film through a T-die at a die temperature of 230°C, adhered to and solidified on the surface of a cooling drum at 40°C, and peeled off to obtain a film. The film obtained was heat set at a temperature of 125°C to obtain the stereocomplex polylactic acid film. When the film obtained was heat treated at 120°C for 60 minutes, the absolute value of the dimension change rate was 3% or less.

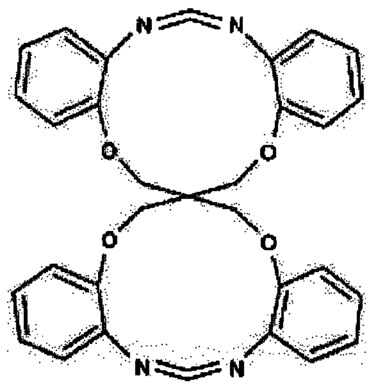

(3)

The evaluation results of the film obtained by operations in Example 1 to 4 and Comparative Examples 1 to 9 are shown in Tables 1, 2 and 3.

Table 1

| | | Example 1 | Example 2 | Example 3 | Example 4 |
|---|---|---|---|---|---|
| Nucleating agent | | Amide compound "Rikaclear" PC1 | Amide compound "Rikaclear" PC1 | Amide compound "Rikaclear" PC1 | Amide compound "Rikaclear" PC1 |
| Amount of nucleating agent added | (wt%) | 0.3 | 0.3 | 0.4 | 0.4 |
| Addition of carbodiimide | (Y/N) | No | No | Yes | Yes |
| Film thickness | (μm) | 40 | 40 | 40 | 40 |
| Stereocomplex crystallinity (S) | (%) | 100 | 100 | 100 | 100 |
| Crystallinity (C) | (%) | 100 | 100 | 100 | 100 |
| Haze | (%) | 0.21 | 0.32 | 0.25 | 0.39 |
| In-plane retardation (R) | (nm) | 2.4 | 2.0 | 1.8 | 3.1 |
| Out-of-plane retardation (Rth) | (nm) | 2.9 | 8.4 | -9.4 | -80.5 |
| Crossed Nicol brightness | ($cd/m^2$) | 0.18 | 0.35 | 0.28 | 0.72 |
| Comprehensive evaluation | | Good | Good | Good | Good |

Table 2

| | | Comparative Example 1 | Comparative Example 2 | Comparative Example 3 | Comparative Example 4 |
|---|---|---|---|---|---|
| Nucleating agent | | - | Amide compound "NJSTAR" NU100 | Amide compound "Rikaclear" PC1 | Amide compound "NJSTAR" NU100 |
| Amount of nucleating agent added | (wt%) | - | 0.3 | 0.3 | 0.3 |

(continued)

| | | Comparative Example 1 | Comparative Example 2 | Comparative Example 3 | Comparative Example 4 |
|---|---|---|---|---|---|
| Nucleating agent | | - | Amide compound "NJSTAR" NU100 | Amide compound "Rikaclear" PC1 | Amide compound "NJSTAR" NU100 |
| Addition of carbodiimide | (Y/N) | No | No | No | No |
| Film thickness | (μm) | 40 | 40 | 40 | 40 |
| Stereocomplex crystallinity (S) | (%) | 100 | 100 | 0 | 0 |
| Crystallinity(C) | (%) | 100 | 100 | 100 | 100 |
| Haze | (%) | 3.20 | 35.20 | 22.81 | 84.12 |
| In-plane retardation (R) | (nm) | 25.9 | 24.9 | 69.1 | 84.2 |
| Out-of-plane retardation (Rth) | (nm) | 59.1 | 62.1 | 129.7 | 119.9 |
| CrossedNicol brightness | ($cd/m^2$) | 5.32 | 4.98 | 19.70 | 34.43 |
| Comprehensive evaluation | | Poor | Poor | Poor | Poor |

Table 3

| | | Comparative Example 5 | Comparative Example 6 | Comparative Example 7 | Comparative Example 8 | Comparative Example 9 |
|---|---|---|---|---|---|---|
| Nucleating agent | | Amide compound "Adekastab" CDA1 | Hydrazide compound "Adekastab" CDA6 | Zinc phenylphosphoric acid"Ecopromote" NP | Talc | - |
| Amount of nucleating agent added | (wt%) | 0.3 | 0.3 | 0.3 | 0.3 | - |
| Addition of carbodiimide | (Y/N) | No | No | No | No | Yes |
| Film thickness | (μm) | 40 | 40 | 40 | 40 | 40 |
| stereocomplex crystallinity (S) | (%) | 100 | 100 | 100 | 100 | 100 |
| Crystallinity (C) | (%) | 100 | 100 | 100 | 100 | 100 |
| Haze | (%) | 24.40 | 3.17 | 2.10 | 4.11 | 5 11 |
| In-plane retardation | (R) (nm) | 29.1 | 20.8 | 9.8 | 18.3 | 26.0 |
| Out-of-plane (Rth) retardation | (nm) | 68.2 | 56.9 | 30.2 | 41.2 | 57.9 |
| Crossed Nicol brightness | ($cd/m^2$) | 9.28 | 4.49 | 2.88 | 7.20 | 6.20 |
| Comprehensive evaluation | | Poor | Poor | Poor | Poor | Poor |

[Example 5]

The stereocomplex polylactic acid film in uncrystallized state with the crystallinity (C) of 26% was obtained by similar operation to Example 1, except that the film obtained by adhering to and solidifying on a cooling drum at a temperature of 40°C and peeling off was not heat set.

This stereocomplex polylactic acid film did not exhibit significant haze increase even after crystallization by heat treatment at 110°C for 5 minutes in a state that the dimension was fixed.

A polarizing plate was prepared by laminating the film obtained as a protection film with a polarizer according to the following method.

<Polarizer>

A polyvinylalcohol film of the average molecular weight of about 2,400, the degree of saponification of 99.9 mol% or more, and the thickness of 75 μm was immersed in purified water at 30°C, then immersed in an aqueous solution of iodine/potassium iodide/water haing the weight ratio of 0.02/2/100 at 30°C. Then, the film was immersed in an aqueous solution of potassium iodide/boric acid/water having the weight ratio of 12/5/100 at 56.5°C. The film was then washed with purified water at 8°C and dried at 65°C to obtain a polarizer of polyvinylalcohol having adsorbed iodine with orientation. Stretching was performed mainly during the process of iodine dying and boric acid treatment. Total stretching ratio was 5.3.

<Polarizing plate>

The above-mentioned stereocomplex polylactic acid film and a saponified triacetylcellulose film were treated with corona discharge at the surfaces to be laminated with the polarizer. These films were coated with a light curing resin "Adeka Optomer" KR-508 manufactured by ADEKA Corporation as an adhesive with a thickness of 2 μm.

Immediately after coating, the stereocomplex polylactic acid film and the saponified triacetylcellulose film were laminated on one side and another side of the above-mentioned polarizer, respectively, interposed by the adhesive-coated surfaces, using a laminate roll. Then, the laminate was irradiated from the both sides with a metal halide lamp so that the accumulated light intensity in the wavelength of 320 to 400 nm was 600 $mJ/cm^2$. The adhesive was cured at 50°C for 24 hours to obtain the polarizing plate.

The polarizing plate obtained was not peeled off by inserting a cutter blade between the adhesive interfaces and exhibited the sufficient adhesive strength.

The polarizing plate obtained was laminated with a glass plate using an acrylic adhesive and subjected to an endurance test at 90°C for 100 hours. Neither significant increase of haze nor decrease of polarization degree was observed after the test. Therefore, the sufficient durability as the polarizing plate was confirmed. In addition, only the stereocomplex polylactic acid film was scraped off from the polarizing plate after the endurance test and analyzed to find that the crystallinity (C) was 100%.

The properties of the uncrystallized film and polarizing plate obtained are shown in Table 4.

[Comparative Example 10]

The uncrystallized stereocomplex polylactic acid film with the crystallinity (C) of 23% and the polarizing plate prepared by using this film were obtained by similar operation to Comparative Example 1, except that the film obtained by adhering to and solidifying on a surface of a cooling drum at 40°C and peeling off was not heat set.

The stereocomplex polylactic acid film obtained exhibited significant haze increase after crystallization by heat treatment at 110°C for 5 minutes in a state that the dimension was fixed.

The polarizing plate obtained was not peeled off by inserting a cutter blade between the adhesive interfaces and exhibited the sufficient adhesive strength. The polarizing plate obtained was laminated with a glass plate using an acrylic adhesive and subjected to an endurance test at 90°C for 100 hours. Significant increase of haze was observed after the test showing that this sample did not have the sufficient durability as the polarizing plate.

In addition, only the stereocomplex polylactic acid film was scraped off from the polarizing plate after the endurance test and analyzed to find that the crystallinity (C) was 100%.

The properties of the uncrystallized film and polarizing plate obtained are shown in Table 4.

[Example 6]

The stereocomplex polylactic acid film with the crystallinity (C) of 78% and the polarizing plate were obtained by similar operation to Example 5, except that the film was heat set at 90°C for 2 minutes in a state that the dimension

was fixed after peeling off.

This stereocomplex polylactic acid film did not exhibit significant haze increase even after crystallization by heat treatment at 110°C for 5 minutes in a state that the dimension was fixed.

However, the polarizing plate obtained was peeled off by inserting a cutter blade between the adhesive interfaces and adhesive strength was not sufficient.

The polarizing plate obtained was laminated with a glass plate using an acrylic adhesive and subjected to an endurance test at 90°C for 100 hours. Neither significant increase of haze nor decrease of polarization degree was observed after the test. Therefore the sufficient durability as the polarizing plate was confirmed. In addition, only the stereocomplex polylactic acid film was scraped off from the polarizing plate after the endurance test and analyzed to find that the crystallinity (C) was 100%.

The properties of the film and polarizing plate obtained are shown in Table 4.

[Table 4]

| | | Example 5 | Comparative Example 10 | Example 6 |
|---|---|---|---|---|
| Uncrystallized film | | | | |
| Amount of nucleating agent added | (%) | 0.3 | - | 0.3 |
| Thickness | (μm) | 60 | 60 | 60 |
| stereocomplex Crystallinity (S) | (%) | 100 | 100 | 100 |
| Crystallinity (C) | (%) | 26 | 23 | 78 |
| Haze | (%) | 0.08 | 0.07 | 0.17 |
| In-plane retardation (R) | (nm) | 4.9 | 4.2 | 5 1 |
| Out-of-plane retardation (Rth) | (nm) | 3.8 | 4.8 | 72 |
| Crossed Nicol brightness | ($cd/m^2$) | 0.06 | 0.06 | 0.15 |
| After heat treatment at 110°C, 5 min | | | | |
| Thickness | (μm) | 60 | 60 | 60 |
| Stereocomplex Crystallinity (S) | (%) | 100 | 100 | 100 |
| Crystallinity (C) | (%) | 100 | 100 | 100 |
| Haze | (%) | 0.29 | 4.80 | 0.27 |
| In-plane retardation (R) | (nm) | 4.1 | 24.9 | 53 |
| Out-of-plane retardation (Rth) | (nm) | 5.7 | 49.1 | 6.5 |
| Crossed Nicol brightness | ($cd/m^2$) | 0.22 | 6.70 | 0.23 |
| Adhesive strength of polarizing plate | | Good | Good | Poor |

The results show that the stereocomplex polylactic acid film containing the amide compound represented by the following general formula (1) exhibits sufficient heat resistance, low retardation and excellent transparency by crystallization. In addition, the film in the uncrystallized state can be especially suitably used as a protection film for the polarizer in the polarizing plate.

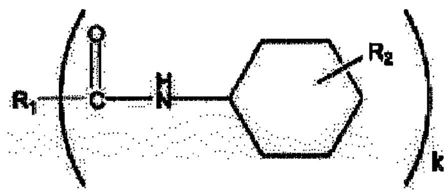

(1)

(wherein $R_1$ represents a residue obtainable by removing all carboxyl groups from 1,2,3-propane tricarboxylic acid or 1,2,3,4-butane tetracarboxylic acid; three or four $R_2$ may be the same as or different from each other and each represents

a hydrogen atom or a linear or branched chain alkyl group having 1 to 10 carbon atoms; and k represents an integer of 3 or 4).

## Claims

**1.** A stereocomplex polylactic acid film containing an amide compound represented by the following general formula (1):

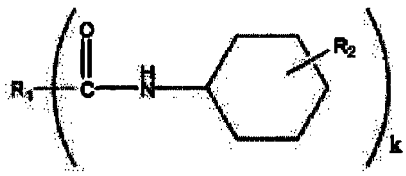

(1)

(wherein $R_1$ represents a residue obtainable by removing all carboxyl groups from 1,2,3-propane tricarboxylic acid or 1,2,3,4-butane tetracarboxylic acid; three or four $R_2$ may be the same as or different from each other and each represents a hydrogen atom or a linear or branched chain alkyl group having 1 to 10 carbon atoms; and k represents an integer of 3 or 4).

**2.** The stereocomplex polylactic acid film according to claim 1, wherein the amide compound is a compound represented by the following formula (2):

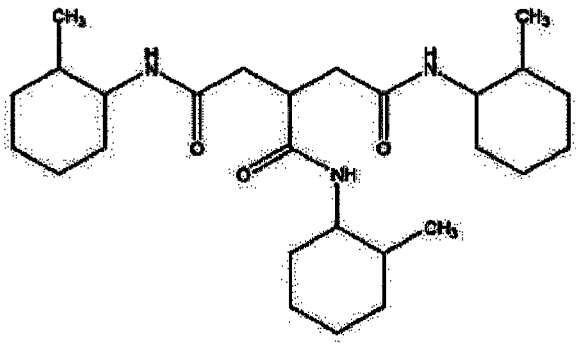

(2)

**3.** The stereocomplex polylactic acid film according to claim 1, wherein the crystallinity (C) is 90% or more.

**4.** The stereocomplex polylactic acid film according to claim 1, wherein the crystallinity (C) is 70% or less.

**5.** The stereocomplex polylactic acid film according to claim 1, wherein the stereocomplex crystallinity (S) is 90% or more.

**6.** The stereocomplex polylactic acid film according to claim 1, wherein the haze is 1% or less.

**7.** The stereocomplex polylactic acid film according to claim 1, wherein the absolute value of the out-of-plane retardation (Rth) is 20 nm or less.

**8.** The stereocomplex polylactic acid film according to claim 1, wherein the out-of-plane retardation (Rth) is -20nm or less.

**9.** A stereocomplex polylactic acid resin composition containing an amide compound represented by the following general formula (1):

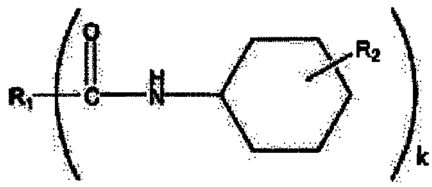

(1)

(wherein $R_1$ represents a residue obtainable by removing all carboxyl groups from 1,2,3-propane tricarboxylic acid or 1,2,3,4-butane tetracarboxylic acid; three or four $R_2$ may be the same as or different from each other and each represents a hydrogen atom or a linear or branched chain alkyl group having 1 to 10 carbon atoms; and k represents an integer of 3 or 4).

**10.** The stereocomplex polylactic acid resin composition according to claim 9, wherein the amide compound is a compound represented by the following formula (2):

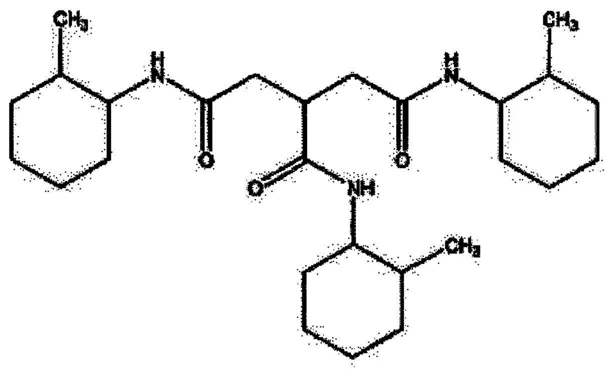

(2)

**INTERNATIONAL SEARCH REPORT**

International application No.
PCT/JP2011/068729

A. CLASSIFICATION OF SUBJECT MATTER
*C08L67/04*(2006.01)i, *C08J5/18*(2006.01)i, *C08K5/20*(2006.01)i, *C08L101/16*
(2006.01)i

According to International Patent Classification (IPC) or to both national classification and IPC

B. FIELDS SEARCHED

Minimum documentation searched (classification system followed by classification symbols)
C08L67/04, C08J5/18, C08K5/20, C08L101/16

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)
CA/REGISTRY(STN)

C. DOCUMENTS CONSIDERED TO BE RELEVANT

| Category* | Citation of document, with indication, where appropriate, of the relevant passages | Relevant to claim No. |
|---|---|---|
| A | JP 2009-155489 A (Toray Industries, Inc.), 16 July 2009 (16.07.2009), entire text (Family: none) | 1-10 |
| A | WO 2003/042302 A1 (New Japan Chemical Co., Ltd.), 22 May 2003 (22.05.2003), entire text & EP 1454958 A1 & WO 2003/042302 A1 & DE 60215218 D & DE 60215218 T & AT 341590 T & KR 10-2005-0044467 A & CN 1585802 A & TW 279417 B | 1-10 |

☒ Further documents are listed in the continuation of Box C.　　☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 24 October, 2011 (24.10.11) | 08 November, 2011 (08.11.11) |
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

International application No.
PCT/JP2011/068729

C (Continuation). DOCUMENTS CONSIDERED TO BE RELEVANT

| Category* | Citation of document, with indication, where appropriate, of the relevant passages | Relevant to claim No. |
|---|---|---|
| A | JP 2008-274126 A (New Japan Chemical Co., Ltd.), 13 November 2008 (13.11.2008), entire text (Family: none) | 1-10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S63241024 B
- JP 2008248162 A
- JP 2004359828 A
- JP 2009263561 A
- JP H07242610 B
- WO 2010071211 A


### Non-patent literature cited in the description


- *Macromolecules,* 1991, vol. 24, 5651